Europäisches Patentamt

European Patent Office

Office européen des brevets

(11) Veröffentlichungsnummer: **0 291 740 B1**

(19)

(12) **EUROPÄISCHE PATENTSCHRIFT**

(45) Veröffentlichungstag der Patentschrift: **03.06.92**

(21) Anmeldenummer: **88106806.8**

(22) Anmeldetag: **28.04.88**

(51) Int. Cl.⁵: **G07C 5/12**, G01D 15/32

(54) **Anordnung zum selbsttätigen Positionieren einer Diagrammscheibe.**

(30) Priorität: **16.05.87 DE 3716486**

(43) Veröffentlichungstag der Anmeldung:
**23.11.88 Patentblatt 88/47**

(45) Bekanntmachung des Hinweises auf die
Patenterteilung:
**03.06.92 Patentblatt 92/23**

(84) Benannte Vertragsstaaten:
**BE ES FR GB GR IT LU NL**

(56) Entgegenhaltungen:
**DE-A- 2 150 524**
**DE-B- 2 416 392**
**DE-C- 1 266 036**

(73) Patentinhaber: **Mannesmann Kienzle GmbH**
**Heinrich-Hertz-Strasse 45**
**W-7730 Villingen-Schwenningen(DE)**

(72) Erfinder: **Helmschrott, Norbert**
**Wasenstrasse 94**
**W-7730 Villingen-Schwenningen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Anordnung zum selbsttätigen Positionieren einer Diagrammscheibe auf einer von einem Laufwerk angetriebenen Diagrammscheibenaufnahme, an welcher Zentrier- und diesen exzentrisch zugeordnete Mitnahmemittel ausgebildet sind, in einem Registriergerät, in welches die mit einer den Zentrier- und Mitnahmemitteln entsprechenden Aufnahmeöffnung versehene Diagrammscheibe durch einen Schlitz eingegeben wird und in welchem die Diagrammscheibenaufnahme im wesentlichen senkrecht zu einem dem Schlitz nachgeordneten Führungsschacht bewegbar ist.

Diagrammscheiben haben bekanntlich den Vorzug, einen relativ leicht handhabbaren, dezentralen Datenspeicher darzustellen, dessen Inhalt sowohl als Sofortinformation unmittelbar, d. h. ohne technische Hilfsmittel lesbar, als auch maschinell auswertbar ist. Vorteilhaft ist ferner, daß Diagrammscheiben nicht nur zur Aufzeichnung unterschiedlicher Meßwerte, sondern auch personenbezogen, also zur Aufzeichnung von Anwesenheits- und Arbeitszeiten gegebenenfalls an verschiedenen Arbeitsplätzen verwendet werden, und in dieser Hinsicht ohne weiteres auch mit Datenkarten mit implantierten elektrischen Speichern in Konkurrenz treten können.

Eine derart komplexe Registrieraufgabe ist bekanntlich in einem Fuhrpark eines Transportunternehmens gegeben, wo die Diagrammscheibe als ein Fahrerplatz- und Fahrzeugwechsel ermöglichender Aufzeichnungsträger dient, auf dem die interessierenden Daten uhrzeitrichtig aufgezeichnet und, abgesehen vom dokumentarischen Wert, für Fahrpersonal, Unternehmer und behördliche Kontrollorgane jederzeit lesbar sind.

Ein die Verwendung von Diagrammscheiben bisher erheblich einschränkender Nachteil stellt bei den üblichen mit einem aufklappbaren Deckel versehenen Diagrammscheiben-Registriergeräten die Vielzahl der beim Einlegen und Wechseln der Diagrammscheiben erforderlichen und von Hand vorzunehmenden Arbeitsgänge dar, so daß es nahelag, ein für die Verwendung von Diagrammscheiben vorgesehenes Registriergerät derart auszubilden, daß die Diagrammscheiben lediglich durch einen Schlitz eingegeben und an diesem entnommen werden können. Ein solches Registriergerät könnte relativ flach gebaut sein und würde somit modernen Anforderungen an die Einbaufähigkeit in Armaturenbrettern und Instrumententafeln entsprechen, es wäre aber auch sozusagen als Registriermodul universell verwendbar.

Eine Anordnung zum selbstätigen Transportieren einer biegsamen Scheibe von einem Führungsschacht zu einer räumlich versetzten Scheibenaufnahme ist aus dem Dokument DE-A-2 150 524 bekannt. Die Führung der Scheibe erfolgt durch eine erste und eine zweite Rolle. Ferner ist eine Abtastvorrichtung vorgesehen zum Feststellen, ob die Scheibe in der Zentrierposition vorhanden ist. Wenn dies zutrifft, wird der Antrieb der Positioniervorrichtung stillgelegt.

Bei einem mit der DE-PS 12 66 036 vorgeschlagenen Registriergerät muß das Zentrieren einer durch einen Schlitz eingegebenen Diagrammscheibe nach wie vor von Hand vorgenommen werden, d. h. das Wechseln des Aufzeichnungsträgers hängt auch bei diesem Registriergerät von der subjektiven Sorgfalt des Bedienenden ab. Von Nachteil ist ferner, daß eine einzugebende Diagrammscheibe von Hand bis in die Zentrierposition eingesteckt werden muß, wobei sie in der Endstellung nur noch schlecht gegriffen werden kann und dennoch während des Registrierens zugänglich bleibt und somit beschädigt werden kann.

Um diese Mängel auszuschalten, insbesondere die Handhabung der Diagrammscheiben weiter zu vereinfachen und von subjektiver Sorgfalt frei zu machen und letzten Endes auch die Akzeptanz für ein derartiges Registriergerät zu verbessern, ist es erforderlich, daß eine einzugebende Diagrammscheibe nach relativ kurzem Einsteckweg durch eine geeignete Anordnung der eingebenden Hand entnommen und selbsttätig in die Registrierposition gebracht wird.

Ebenso selbsttätig soll eine in dem Registriergerät befindliche Diagrammscheibe durch einen geeigneten Befehl ausgegeben werden können.

Ein solches Gerätekonzept erfordert eine Diagrammscheibenaufnahme, die nicht nur zeitabhängig angetrieben sondern auch senkrecht zum Führungsschacht der Diagrammscheiben und zwar selbsttätig bewegbar sein muß. Da kraftschlüssig wirkende Haltemittel oder Spannmittel für die Diagrammscheiben an der Diagrammscheibenaufnahme nicht anbringbar, weil sie im Gegensatz zum Einlegen der Diagrammscheiben von Hand nicht betätigbar sind, ist die Mitnahme der Diagrammscheiben auf eine formschlüssige Verbindung angewiesen, d. h. einem an der Diagrammscheibenaufnahme ausgebildeten Zentrierdorn muß exzentrisch ein Zapfen oder ein Mitnahmeansatz zugeordnet und die verwendeten Diagrammscheiben müssen mit entsprechenden Aufnahmeöffnungen versehen sein. Diese an sich bekannte Diagrammscheibenaufnahme, die nebenbei erwähnt, die einfachste Lösung darstellt, Diagrammscheiben uhrzeitrichtig oder einem anderen Zeitmaßstab entsprechend aufzunehmen, schafft bezüglich des angestrebten selbsttätigen Positionierens erhebliche Schwierigkeiten, zumal die Diagrammscheiben im allgemeinen relativ flexibel sind und der Positioniervorgang in vielen Anwendungsfällen in verhältnismäßig kurzer Zeit abgeschlossen sein sollte. Das Ziel, ein universell verwendbares Registriermodul zu schaffen, bedeutet ferner, daß auch die Bedingungen einer Großserienfertigung erfüllt sein müssen.

Der vorliegenden Erfindung war somit die Aufgabe gestellt, eine Anordnung zu schaffen, die mit möglichst geringem Aufwand ein selbsttätiges Positionieren einer durch einen Schlitz in das betreffende Registriergerät eingegebenen Diagrammscheibe auf einer Diagrammscheibenaufnahme gestattet, an welcher ein Zentrierdorn und diesem exzentrisch zugeordnete Mitnahmemittel ausgebildet sind.

Die Lösung dieser Aufgabe sieht vor, daß wenigstens eine erste Transportrolle vorgesehen ist, welche eine in den Führungsschacht vorgesteckte Diagrammscheibe diametral in Richtung der Zentrierposition transportiert, daß eine zweite Transportrolle vorgesehen ist, welche die eingegebene Diagrammscheibe von der ersten Transportrolle übernimmt, in die Zentrierposition führt und in Umfangsrichtung antreibt und daß eine Schalteinrichtung vorgesehen ist, welche den Antrieb der Positionieranordnung dann stillsetzt, wenn die während der Drehbewegung der Diagrammscheibe gegen die Digrammscheibe bewegten Zentrier- und Mitnahmemittel mit der Aufnahmeöffnung der Diagrammscheibe in Eingriff stehen.

Eine bevorzugte Ausführungsform ist unter anderem dadurch gekennzeichnet, daß als Positionierantrieb ein Motor vorgesehen ist, daß die Transportrollen getrieblich miteinander verbunden sind und daß die Gegendruckrolle der zweiten Transportrolle radial magnetisiert ist und ihr ein magnetfeldempfindlicher Sensor zugeordnet ist. Das bevorzugte Ausführungsbeispiel ist ferner dadurch gekennzeichnet, daß dem Führungsschacht eine erste Lichtschranke zugeordnet ist, mit welcher bei Unterbrechung durch eine vorgesteckte Diagrammscheibe der Antrieb der Positionieranordnung eingeschaltet wird und daß in Richtung der Zentrierposition der Diagrammscheibe eine zweite Lichtschranke vorgesehen ist, welche im Zusammenwirken mit der ersten die Bewegung der Diagrammscheibenaufnahme, welcher ein Ringsegment derart zugeordnet ist, daß die Zentrier- und Mitnahmemittel zusätzlich als Gewinde ausgebildet sind, senkrecht zum Führungsschacht steuert.

Die erfindungsgemäße Anordnung gestattet es, daß eine in den Schlitz des Registriergerätes eingegebene Diagrammscheibe relativ frühzeitig, d. h. solange sie noch gut greifbar ist, der eingebenden Hand entnommen und selbsttätig in die Registrierposition gebracht wird, in der sie von außen nicht mehr zugänglich ist. Ferner ermöglicht die gefundene, mit besonders einfachen Mitteln auskommende Lösung das Positionieren einer Diagrammscheibe auf einem quasi ruhenden Zentrier- und Mitnahmedorn, wozu lediglich eine im wesentlichen geradlinige als auch eine Drehbewegung der Diagrammscheibe, nicht jedoch ein Richten der Diagrammscheibenaufnahme auf die aktuelle Uhrzeit erforderlich sind. Dabei ist eine Kombination von kraftschlüssig wirkenden Transportrollen vorgesehen, die von einem einzigen Motor angetrieben und von einer Schalteinrichtung, wenn deren Sensor erkennt, daß sich die eingegebene Diagrammscheibe nicht mehr dreht, sie somit auf dem Zentrierund Mitnahmedorn der Diagrammscheibenaufnahme positioniert ist, selbsttätig stillgesetzt werden. Vorteilhaft ist bei der gefundenen Lösung ferner, daß, um den Zeitantrieb der Diagrammscheiben zu entlasten, es lediglich erforderlich ist, die die Drehbewegung der Diagrammscheiben bewirkende Transportrolle außer Friktion mit der ihr zugeordneten Gegendruckrolle zu bringen. Zusammen mit der zusätzlichen Maßnahme, den Zentrier- und Mitnahmemitteln ein mit einer angebogenen Zunge versehenes Ringsegment zuzuordnen, welches in Form eines Ein-Gang-Gewindes sozusagen als Fangvorrichtung dient, ist auch unter relativ ungünstigen Bedingungen, d. h. hoher Luftfeuchtigkeit oder geringer Steifigkeit der Diagrammscheibe, die Reproduzierbarkeit des Positionierens der Diagrammscheiben gewährleistet.

Im folgenden sei die Erfindung anhand der beigefügten Zeichnungen näher erläutert. Es zeigen

FIGUR 1 eine Frontansicht eines gattungsgemäßen Registriergerätes,

FIGUR 2 eine weitgehend schematisierte Darstellung der erfindungsgemäßen Positionieranordnung,

FIGUR 3 eine Draufsicht auf ein bevorzugtes Ausführungsbeispiel der Positionieranordnung,

FIGUR 4 eine teilweise geschnittene Seitenansicht der Getriebebaueinheit der Positionieranordnung,

FIGUR 5 eine Schnittdarstellung gemäß der Schnittlinie A-B in FIGUR 3.

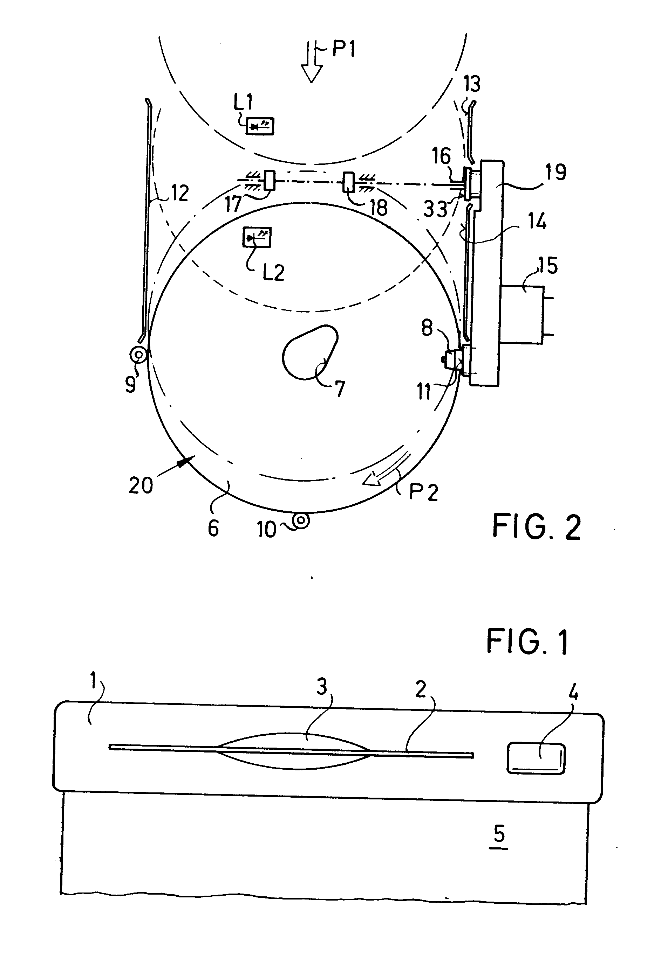

Die Frontansicht FIGUR 1 zeigt eine relativ schmale Frontplatte 1, die, wenn das betreffende Registriergerät beispielsweise in einem Armaturenbrett eingebaut ist, im wesentlichen in der Einbauebene angeordnet ist. In der Frontplatte 1 sind ein dem Eingeben und Entnehmen von Diagrammscheiben dienender Schlitz 2 und eine diesem zugeordnete, das Greifen der Diagrammscheiben erleichternde Griffmulde 3 ausgebildet. Eine vorzugsweise als Leuchttaste ausgebildete Taste 4 dient dazu, das Ausgeben einer in dem Registriergerät befindlichen Diagrammscheibe zu steuern. Der Taste 4 kann ein Schloß zugeordnet sein, mittels dessen eine dem Schlitz 2 zugeordnete Verriegelung betätigbar ist, so daß das Registriergerät, dessen Gehäuse mit 5 bezeichnet ist, lediglich von einem befugten Personenkreis bedient werden kann.

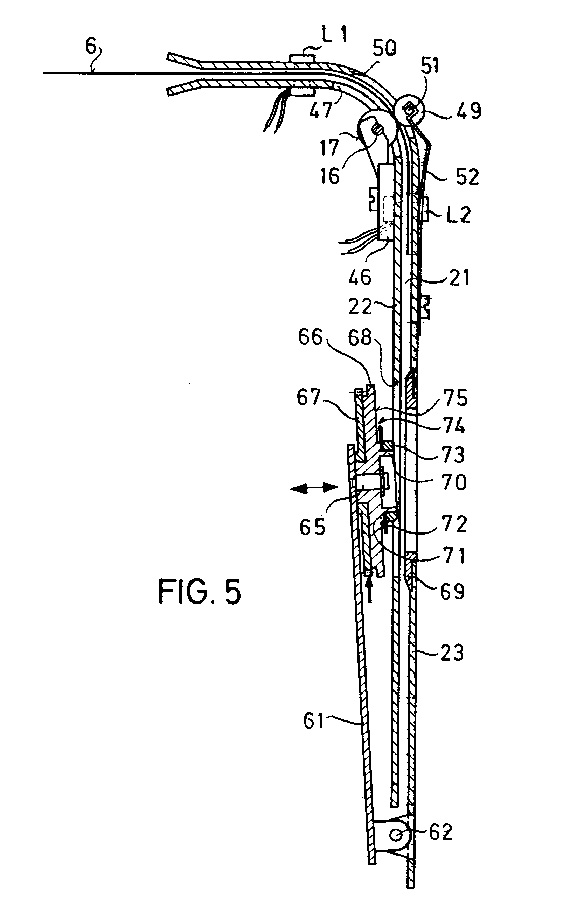

Wie ferner aus FIGUR 1, aber auch aus FIGUR 5 ersichtlich ist, werden bei dem dargestellten Registriergerät die Diagrammscheiben im wesentlichen senkrecht zur Einbauebene in das Registriergerät eingegeben. In der Registrierposition befinden sich die Diagrammscheiben jedoch, um der Forderung nach möglichst geringer Einbautiefe gerecht zu werden, in einer zur Einbauebene parallelen Ebene.

Gemäß FIGUR 2 hat eine in Pfeilrichtung P1 eingegebene Diagrammscheibe 6, die mit einer vorzugsweise eiförmigen Aufnahmeöffnung 7 versehen ist, bereits die Zentrierposition erreicht, in der sie zum Auffädeln auf die nicht dargestellten, an der Diagrammscheibenaufnahme ausgebildeten Zentrier- und Mitnahmemittel in Umfangsrichtung (Pfeil P2) von einer Transportrolle 8 angetrieben wird. Geführt ist die Diagrammscheibe 6 in der Zentrierposition von Führungsrollen 9 und 10 sowie der Planfläche 11 eines gleichachsig mit der Transportrolle 8 angeordneten Zahnrades. Mit 12, 13 und 14 sind den Führungsschacht, in dem die Diagrammscheiben transportiert werden, seitlich begrenzende Stirnwände bezeichnet, während L1 und L2 dem Führungsschacht zugeordnete Lichtschranken darstellen. Das Getriebe, welches die Drehbewegungen eines Motors 15 einerseits auf die Transportrolle 8, andererseits auf eine Welle 16 leitet, auf welcher zwei Transportrollen 17 und 18 mit einem die Aufnahmeöffnung 7 der Diagrammscheiben berücksichtigenden Abstand angeordnet sind, ist in einem gemeinsamen, auch den Motor 15 aufnehmenden Gehäuse 19 gelagert und als Baueinheit, wie noch im folgenden näher erläutert wird, dem Führungsschacht zugeordnet.

Soll eine Diagrammscheibe 6 in das Registriergerät eingegeben werden, so wird durch Betätigen der Taste 4 zunächst die Verriegelung des Schlitzes 2, die beispielsweise auch durch eine den Schlitz 2 abdeckende Klappe realisiert sein kann, geöffnet. Falls sich eine Diagrammscheibe im Registriergerät befindet, wird durch die Tastenbetätigung das Abheben der Registrierorgane ausgelöst, mit geeignetem Zeitversatz der Motor des Positionierantriebes auf Ausgeben einer Diagrammscheibe geschaltet und der den Arm, auf dem die Diagrammscheibenaufnahme gelagert ist, verschwenkende Antrieb gesteuert. Der Motor des Positionierantriebes wird abgeschaltet, wenn die Lichtschranke L1 nicht mehr unterbrochen ist, d. h. die aus dem Schlitz 2 herausragende Diagrammscheibe dem Registriergerät entnommen ist oder, falls die Diagrammscheibe nicht entnommen wurde, eine bestimmte Zeit abgelaufen ist.

Ist der Führungsschacht frei, kann eine neue, d. h. unbeschriebene Diagrammscheibe oder auch die soeben zur Kontrolle entnommene eingegeben und bis zu den Transportrollen 17 und 18 vorgesteckt werden. Dabei wird die Lichtschranke L1 unterbrochen und der Motor des Positionierantriebes auf Einziehen einer Diagrammscheibe angesteuert. In der gestrichelt dargestellten Position 20 wird die eingegebene Diagrammscheibe, die bis dahin zwischen den Führungswänden 12, 13 und 14 des Führungsschachtes ausschließlich in diametraler Richtung durch die Transportrollen 17 und 18 transportiert worden ist, von der Transportrolle 8 übernommen, in die Zentrierposition geführt und in Umfangsrichtung angetrieben. Der Arm, an dem die Diagrammscheibenaufnahme gelagert ist, kann, wenn wie bei Fahrtschreibern eine besonders kurze Positionierzeit angestrebt werden muß, bereits dann abgesenkt werden, wenn die eingegebene Diagrammscheibe die Lichtschranke L1 während des Einziehens wieder freigibt. Das Absenken der Registrierorgane ist jedoch erst dann möglich, wenn der Positioniervorgang abgeschlossen und die Diagrammscheibe auf den Zentrier- und Mitnahmemitteln aufgenommen ist, d. h. wenn ein der Transportrolle 8 zugeordneter Impulsgeber keine Impulse mehr liefert. Gleichzeitig wird, um den Zeitantrieb der Diagrammscheibe zu entlasten, auch die Friktion zwischen der Transportrolle 8 und der dieser zugeordneten Gegendruckrolle aufgehoben.

Wird das Positionieren der Diagrammscheiben von einem Mikroprozessor gesteuert, sind neben dem Hauptprogramm selbstverständlich verschiedene Programmschleifen denkbar, die der Überprüfung der einzelnen Programmschritte und Funktionen dienen und beispielsweise einen Abbruch des Positioniervorgangs auslösen, wenn nach einer bestimmten Zeit oder einer vorgegebenen Impulszahl die Diagrammscheibe nicht positioniert ist, die Lichtschranken L1 und L2 nicht in der richtigen Folge unterbrochen werden bzw. unterbrochen bleiben und dergl.

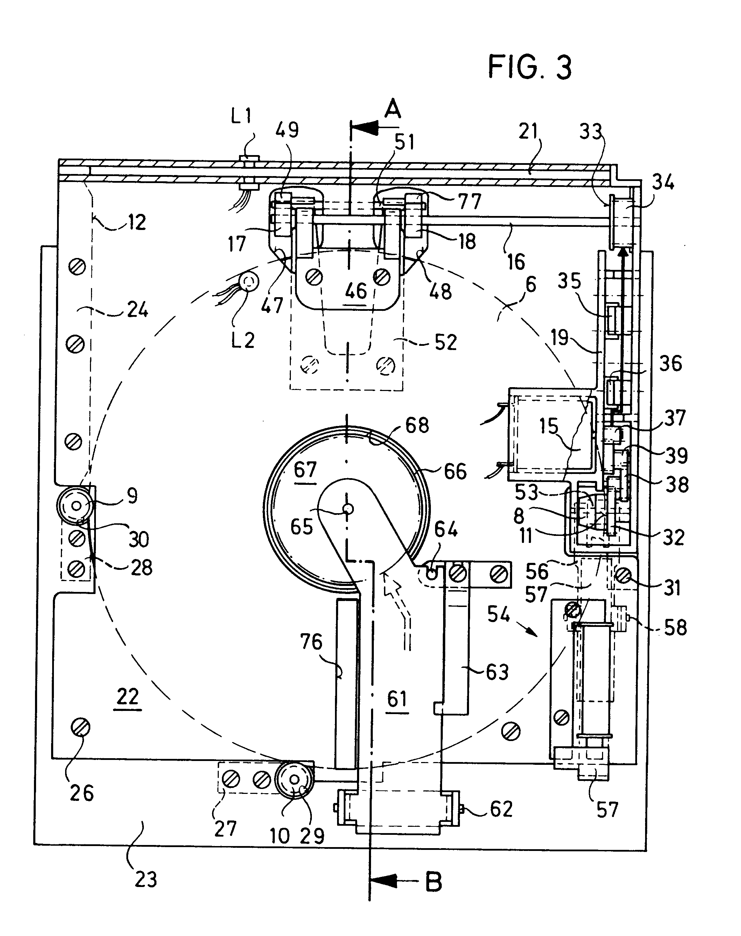

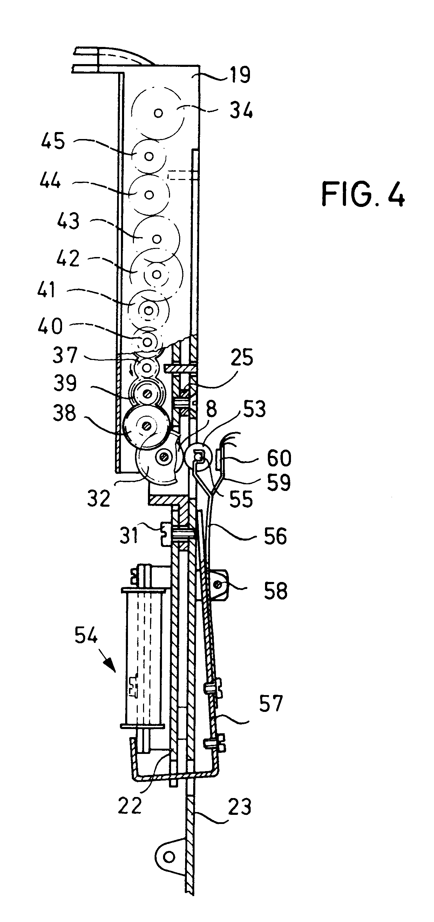

Das bevorzugte Ausführungsbeispiel der Positionieranordnung, das im folgenden anhand der FIGUREN 3, 4 und 5 beschrieben werden soll, zeigt, daß der Führungsschacht 21 im wesentlichen von zwei abgewinkelten Platten 22 und 23 gebildet wird, die in geeigneter Weise, d. h. unter Zwischenlage von Leisten 24 und Abstandsscheiben 25, miteinander verschraubt sind. Stellvertretend ist eine der verwendeten Schrauben mit 26 bezeichnet.

Die Führungsrollen 9 und 10, an deren Umfang vorzugsweise eine umlaufende, V-förmige Nut ausgebildet ist, sind auf geeigneten, mit der Platte 23 verbundenen Trägern 27 und 28 drehbar gelagert und greifen durch Öffnungen 29 und 30 in der Platte 23 sowie nicht näher bezeichnete Freisparungen in der Platte 22 in den Führungsschacht 21 bzw. zwischen die Platten 22 und 23 ein, wobei die eine Führungsrolle 10 den Führungsschacht 21 in Transportrichtung begrenzt und damit die Zentrierposition der Diagrammscheiben bestimmt. Auch das Getriebegehäuse 19 ist den Platten 22 und 23 derart seitlich zugefügt und mit diesen verbunden (Schraube 31), daß zum Teil die Planflächen der Zahnräder des Getriebes, z. B. die Planfläche 11 des mit der Transportrolle 8 gleichachsig gelagerten Zahnrades 32 und eine Planfläche 33 eines mit der Welle 16 verbundenen Zahnrades 34 sowie am Getriebegehäuse 19 ausgebildete Finger 35 und 36, die stirnseitigen Führungsmittel an der einen Seite des Führungsschachtes 21 bilden. Das Getriebe der Positionieranordnung weist, ausgehend von einem auf der nicht bezeichneten Welle des Motors 15 befestigten Ritzel 37 mit den Zahnradpaaren 38 und 39 sowie mit dem Zahnrad 32 einen ersten Getriebezweig zur Transportrolle 8 auf, ein zweiter Getriebezweig mit den Zahnradpaaren 40, 41 und 42 sowie den Zwischenrädern 43, 44 und 45 bildet die Antriebsverbindung zum Zahnrad 34 und somit zur Welle 16. Diese ist einerseits im Getriebegehäuse 19 gelagert, andererseits in einseitig offenen Lagerungen eines auf der Platte 22 befestigten, zweiarmigen Lagerbocks 46 gehaltert und trägt, wie bereits beschrieben, die Transportrollen 17 und 18, die durch Freisparungen 47 und 48 in der Platte 22 in den Führungsschacht 21 eingreifen. Den Transportrollen 17 und 18 sind Gegendruckrollen zugeordnet, die ebenfalls in den Führungsschacht 21 eingreifen. Die Gegendruckrollen sind mit 49 und 77 bezeichnet, die zugeordnete Freisparung in der Platte 23 mit 50. Wie aus FIGUR 5 hervorgeht, ist die gemeinsame Achse 51 der Gegendruckrollen oder einer Gegendruckwalze in einer doppelarmigen, federnden Lagerbrücke 52 gehaltert, welche an der Platte 23 befestigt ist.

Eine der Transportrolle 8 zugeordnete Gegendruckrolle 53 kann über einen Elektromagneten 54 in und außer Friktion mit der Transportrolle 8 geschaltet werden. Die Gegendruckrolle 53 ist auf einer Achse 55 angeordnet, die in gabelförmigen Enden einer Blattfeder 56 gehaltert ist. Die Blattfeder 56 ihrerseits ist auf einem mit dem Elektromagneten 54 zusammenwirkenden Ankerteil 57, das um eine Achse 58 schwenkbar an der Platte 23 angeordnet ist, befestigt. Auf einer an der Blattfeder 56 angeformten Zunge 59 ist ein Hall-Element 60 angebracht, das zusammen mit der radial magnetisierten Gegendruckrolle 53 als Impulsgeber dient.

Mit 61 ist ein Arm bezeichnet, der auf einer der Platte 23 zugeordneten Achse 62 schwenkbar gelagert ist, unter der Wirkung einer Feder 63 steht und in der abgesenkten Stellung mit einem Fixierstift 64 zusammenwirkt. An dem Arm 61, der mittels eines Elektromagneten odder auch motorisch betätigbar ist, ist eine Achse 65 befestigt, auf der die Diagrammscheibenaufnahme 66 gelagert ist. Ein der Diagrammscheibenaufnahme 66 zugeordnetes Zahnrad 67 steht, was, weil nicht erfindungswesentlich, lediglich durch einen Pfeil dargestellt ist, über eine auf dem Arm 61 gelagerte Räderkette in Eingriff mit einem Laufwerk, welches den uhrzeitrichtigen Antrieb für die Diagrammscheibenaufnahme 66 liefert.

Im abgesenkten Zustand des Armes 61 ist die Diagrammscheibenaufnahme 66 durch eine Öffnung 68 in der Platte 22 in den Führungsschacht 21 eingetaucht und liegt unter der Wirkung der Feder 63 unter Zwischenlage einer Diagrammscheibe 6 auf einem in der Platte 23 vorgesehenen Einsatz 69 auf. Um das auf das Laufwerk wirkende Lastmoment zu verringern, kann der Einsatz 69 drehbar gelagert sein. Die an der Diagrammscheibenaufnahme 66 ausgebildeten Zentrier- und Mitnahmemittel sehen einen zylindrischen Ansatz 70 sowie einen relativ kurzen dem Querschnitt der Aufnahmeöffnung 7 der Diagrammscheiben entsprechenden Mitnehmer 71 vor. Ein Ringsegment 72, aus dessen Ringebene eine dem Auffädeln der Diagrammscheiben dienende Zunge herausgebogen ist, wird durch eine auf dem Ansatz 70 aufgepreßte, den Zentrierdorn vervollständigende Hülse 73 festgehalten. Eine sozusagen durch Aufschrauben auf der Diagrammscheibenaufnahme 66 positionierte Diagrammscheibe befindet sich somit in einem Spalt 74 zwischen dem Ringsegment 72 und der Auflagefläche 75 der Diagrammscheibenaufnahme 66, der nur um ein geringes Maß größer ist als die Stärke der Diagrammscheibe. Mit 76 ist ein in der Platte 22 befindlicher Ausschnitt bezeichnet, der dem Durchtritt der nicht dargestellten Registrierorgane in den Führungsschacht 21 und auf die Diagrammscheibe 6 dient.

Der Vollständigkeit halber sei noch erwähnt, daß für den Transport der Diagrammscheiben eine im wesentlichen in einer Linie liegende Transportrollenreihe denkbar ist, mit dem Vorteil, daß die einzelnen Transportrollen unmittelbar dem Gehäuse 19 zugeordnet sein können.

**Patentansprüche**

1. Anordnung zum selbsttätigen Positionieren einer Diagrammscheibe (6) auf einer von einem Laufwerk angetriebenen Diagrammscheibenaufnahme (66), an welcher Zentrier- und diesen exzentrisch zugeordnete Mitnahmemittel (73, 71) ausgebildet sind, in einem Registriergerät, in welches die mit einer den Zentrier- und Mitnahmemitteln entsprechenden Aufnahmeöffnung (4) versehene Diagrammscheibe durch einen Schlitz (2) eingegeben wird und in welchem die Diagrammscheibenaufnahme im wesentlichen senkrecht zu einem dem Schlitz nachgeordneten Führungsschacht (21) bewegbar ist,
dadurch gekennzeichnet,
daß wenigstens eine erste Transportrolle (z. B. 17) vorgesehen ist, welche eine in den Führungsschacht (21) vorgesteckte Diagrammscheibe (6) diametral in Richtung der Zentrierposition transportiert,
daß eine zweite Transportrolle (8) vorgesehen ist, welche die eingegebene Diagrammscheibe (6) von der ersten Transportrolle (17) übernimmt, in die Zentrierposition führt und in Umfangsrichtung antreibt und
daß eine Schalteinrichtung (53, 60) vorgesehen ist, welche den Antrieb der Positionieranordnung dann stillsetzt, wenn die während der Drehbewegung der Diagrammscheibe (6) gegen die Diagrammscheibe (6) bewegten Zentrier- und Mitnahmemittel (71, 73) mit der Aufnahmeöffnung (7) der Diagrammscheibe (6) in Eingriff stehen.

2. Anordnung nach Anspruch 1,
dadurch gekennzeichnet,
daß die Zentrierposition von wenigstens einer in den Führungsschacht (21) eingreifenden und der Stirnseite einer Diagrammscheibe (6) zugeordneten Führungsrolle (z. B. 10) gebildet ist.

3. Anordnung nach Anspruch 1,
dadurch gekennzeichnet,
daß als Positionierantrieb ein Motor (15) vorgesehen ist und
daß die Transportrollen (14, 18 und 8) getrieblich miteinander verbunden sind.

4. Anordnung nach Anspruch 3,
dadurch gekennzeichnet,
daß Motor (15), Getriebe (32, 34, 37 bis 45) und Transportrollen (17, 18 und 8) zu einer an die den Führungsschacht (21) bildenden Platten (22, 23) anflanschbaren Baueinheit zusammengefaßt sind.

5. Anordnung nach Anspruch 1,
dadurch gekennzeichnet,
daß die Gegendruckrolle (53) der zweiten Transportrolle (8) radial magnetisiert ist und
daß der Gegendruckrolle (53) ein magnetfeldempfindlicher Sensor (60) zugeordnet ist.

6. Anordnung nach Anspruch 1,
dadurch gekennzeichnet,
daß der Diagrammscheibenaufnahme (66) ein Ringsegment (72) derart zugeordnet ist, daß die Zentrier- und Mitnahmemittel (71, 73) zusätzlich als Gewinde ausgebildet sind.

7. Anordnung nach Anspruch 1,
dadurch gekennzeichnet,
daß dem Führungsschacht (21) eine erste Lichtschranke (1) zugeordnet ist, mit welcher bei Unterbrechung durch eine vorgesteckte Diagrammscheibe (6) der Antrieb der Positionieranordnung eingeschaltet wird und
daß in Richtung der Zentrierposition der Diagrammscheibe (6) eine zweite Lichtschranke (L2) vorgesehen ist, welche im Zusammenwirken mit der ersten die Bewegung der Diagrammscheibenaufnahme (66) senkrecht zum Führungsschacht (21) steuert.

8. Anordnung nach Anspruch 1,
dadurch gekennzeichnet,
daß mit dem Stillsetzen des Antriebes der Positionieranordnung die Friktion zwischen der zweiten Transportrolle (8) und der dieser zugeordneten Gegendruckrolle (53) gelöst wird.

## Claims

1. Arrangement for automatic positioning of a graph chart (6) on a graph chart receiver (66) which is driven by a drive mechanism and on which centring means and entrainment means associated eccentrically therewith (73, 71) are constructed, in a recording device into which the graph chart, which is provided with a receiving opening (7) appropriate to the centring and entrainment means, is inserted through a slot (2), and in which the graph chart receiver is movable substantially perpendicular to a guide passageway (21) arranged behind the slot, characterized in that at least one first transport roller (e.g. 17) is provided which transports a graph chart (6) pushed forward into the guide passageway (21) diametrically in the direction of the centring position, in that a second transport roller (8) is provided which takes the inserted graph chart (6) from the first transport roller (17), guides it into the centring position and drives it in the peripheral direction, and in that a switching device (53, 60) is provided which stops the drive of the positioning arrangement when the centring and entrainment means (71, 73), which are moved towards the graph chart (6) during the rotary movement of the graph chart (6), are in engagement with the receiving opening (7) of the graph chart (6).

2. Arrangement according to Claim 1, characterized in that the centring position is formed by at least one guide roller (e.g. 10) engaging in the guide passageway (21) and associated with the end side of a graph chart (6).

3. Arrangement according to Claim 1, characterized in that a motor (15) is provided as the positioning drive, and in that the transport rollers (14, 18 and 8) are in geared connection with one another.

4. Arrangement according to Claim 3, characterized in that the motor (15), gear mechanism (32, 34, 37 to 45) and transport rollers (17, 18 and 8) are grouped together to form a structural unit which can be flanged onto the plates (22, 23) forming the guide passageway (21).

5. Arrangement according to Claim 1, characterized in that the counterpressure roller (53) of the second transport roller (8) is radially magnetized, and in that a sensor (60) sensitive to magnetic field is associated with the counterpressure roller (53).

6. Arrangement according to Claim 1, characterized in that an annular segment (72) is associated with the graph chart receiver (66) such that the centring and entrainment means (71, 73) are additionally of threaded construction.

7. Arrangement according to Claim 1, characterized in that there is associated with the guide passageway (21) a first light barrier (1) by means of which, when it is interrupted by a graph chart (6) which is pushed forward, the drive of the positioning arrangement is switched on, and in that there is provided in the direction of the centring position of the graph chart (6) a second light barrier (L2) which, in cooperation with the first, controls the movement perpendicular to the guide passageway (21) of the graph chart receiver (66).

8. Arrangement according to Claim 1, characterized in that when the drive of the positioning arrangement is stopped, the frictional engagement between the second transport roller (8) and the counterpressure roller (53) associated therewith is released.

**Revendications**

1. Dispositif pour le positionnement automatique d'un disque de diagramme (6) sur un dispositif récepteur de disques de diagramme (66) sur lequel sont formés des moyens de centrage et d'entraînement (73, 71), les derniers étant excentriquement associés aux premiers, dans un appareil enregistreur dans lequel ledit disque de diagramme pourvu d'un orifice de réception (7) correspondant audits moyens de centrage et d'entraînement est introduit par une fente (2) et dans lequel ledit dispositif récepteur de disques de diagramme peut être déplacé, pour l'essentiel, perpendiculairement à un puits de guidage (21) disposé en aval de ladite fente, caractérisé par le fait

qu'il est prévu au moins un premier galet de transport (par exemple 17) qui transporte un disque de diagramme (6) préenfiché dans le puits de guidage (21) diamétralement en direction de la position de centrage,

qu'il est prévu un deuxième galet de transport (8) qui reprend le disque de diagramme (6) introduit du premier galet de transport (17), l'achemine à la position de centrage et l'entraîne dans le sens circonférentiel et

qu'il est prévu un dispositif de commutation (53, 60) qui met l'entraînement du dispositif de positionnement à l'arrêt lorsque les moyens de centrage et d'entraînement (71, 73), qui sont déplacés, pendant le mouvement de rotation du disque de diagramme (6), contre ledit disque de diagramme (6), engrènent avec l'orifice de réception (7) dudit disque de diagramme (6).

2. Dispositif selon la revendication 1, caractérisé par le fait
que la position de centrage est constituée par au moins un galet de guidage (par exemple 10) qui pénètre dans le puits de guidage (21) et qui est associé à la face frontale d'un disque de diagramme (6).

3. Dispositif selon la revendication 1, caractérisé par le fait
que, comme entraînement de positionnement, il est prévu un moteur (15) et
que les galets de transport (14, 18 et 8) sont fonctionnellement reliés les uns aux autres.

4. Dispositif selon la revendication 1, caractérisé par le fait
que moteur (15), engrenage (32, 34, 37 à 45) et galets de transport (17, 18 et 8) sont regroupés pour former un ensemble constructif pouvant être fixé par bride sur les platines (22, 23) formant le puits de guidage (21).

5. Dispositif selon la revendication 1, caractérisé par le fait
que le galet antagoniste (53) du deuxième galet de transport (8) est radialement aimanté et
qu audit galet antagoniste (53) est associé un capteur (60) sensible aux champs magnétiques.

6. Dispositif selon la revendication 1, caractérisé par le fait qu'au dispositif récepteur de disques de diagramme (66) est associé un segment annulaire (72) de telle sorte que les moyens de centrage et d'entraînement (71, 73) sont réalisés, en plus, comme filetage.

7. Dispositif selon la revendication 1, caractérisé par le fait qu'au puits de guidage (21) est associée une première barrière opto-éléctronique (LI) qui assure, en cas d'interruption par un disque de diagramme (6) préenfiché, la mise en marche de l'entraînement du dispositif de positionnement et que, en direction de la position de centrage du disque de diagramme (6), il est prévue une seconde barrière opto-électronique (L2) qui commande, en coopération avec la première, le mouvement du dispositif récepteur de disques de diagramme (66) perpendiculairement au puits de guidage (21).

8. Dispositif selon la revendication 1, caractérisé par le fait que, par la mise à l'arrêt de l'entraînement du dispositif de positionnement, la friction entre le deuxième galet de transport (8) et le galet antagoniste (53) qui lui est associé est supprimée.

FIG. 2

FIG. 1

# FIG. 3

FIG. 4

FIG. 5